# EUROPÄISCHE PATENTANMELDUNG

(11) **EP 1 607 133 A1**
(43) Veröffentlichungstag der Anmeldung: **21.12.2005**
(21) Anmeldenummer: 05016519.0
(22) Anmeldetag: 11.04.2002
(51) Int. Cl.: B01D 53/94, F01N 3/20, F01N 3/08

(54) **Abgasreinigungsanlage mit Reduktionsmittelversorgung**

(30) Priorität: 12.06.2001 DE 10128414
(62) Teilanmeldung aus: 02730144.9
(71) Anmelder: DaimlerChrysler AG, 70567 Stuttgart (DE)
(72) Erfinder: Duvinage, Frank, 73230 Kirchheim (DE); Goerigk, Christian, 71404 Korb (DE); Nolte, Arno, 70188 Stuttgart (DE); Paule, Markus, 71404 Korb (DE); Sander, Henning, 71679 Asperg (DE)

(57) **Zusammenfassung**

Es wird eine Abgasreinigungsanlage zur Reinigung des Abgases einer vorzugsweise mager betriebenen Brennkraftmaschine, insbesondere eines in Kraftfahrzeugen verwendeten Dieselmotors vorgeschlagen, in der ein SCR-Katalysator angeordnet ist und mit einer Reduktionsmittelversorgung, wobei von der Reduktionsmittelversorgung Ammoniak eingangsseitig des SCR-Katalysators in das Abgas der Brennkraftmaschine zugebbar ist, wobei die Reduktionsmittelversorgung eine Ammoniak-Erzeugungseinheit zur Erzeugung des in das Abgas der Brennkraftmaschine (1) zugebbaren Ammoniaks aufweist.

Erfindungsgemäß ist die Ammoniak-Erzeugungseinheit zur Umsetzung von mit Luft oder sauerstoffhaltigem Abgas zugeführtem Stickstoff zu Ammoniak ausgebildet.

## Beschreibung

Die vorliegende Erfindung betrifft eine Abgasreinigungsanlage zur Reinigung des Abgases einer vorzugsweise mager betriebenen Brennkraftmaschine mit den Merkmalen des Oberbegriffs des Anspruchs 1.

Es ist bekannt, dass zur Entfernung von Stickoxiden aus sauerstoffhaltigen Abgasen SCR-Katalysatoren (SCR = selective catalytic reduction) eingesetzt werden können. Diese SCR-Katalysatoren katalysieren eine selektive Reduktionsreaktion, bei der mit Hilfe von ins Abgas eingebrachtem Ammoniak oder eines ammoniakabspaltenden Reduktionsmittels Stickoxide unter oxidierenden Bedingungen zu unschädlichem Stickstoff reduziert werden. Eine entsprechende Abgasreinigungsanlage ist z.B. aus der DE 199 03 533 A1 bekannt. Die Abgasreinigungsanlage weist eine Ammoniak-Erzeugungseinheit auf, in welcher Ammoniak durch Reaktion von in einem fetten Abgas enthaltenen Komponenten erzeugt und zur Stickoxidentfernung einem SCR-Katalysator zugeführt wird. Die Ammoniak-Erzeugungseinheit ist als Plasma-Reaktor ausgebildet, in welchem eine Gasentladung abläuft, wobei unter reduzierenden Bedingungen Stickoxide zu Ammoniak reduziert werden. Das eingesetzte reduzierende Gas wird von einem unterstöchiometrisch betriebenen Brenner erzeugt.

Aufgabe der Erfindung ist es demgegenüber, eine Abgasreinigungsanlage anzugeben, welche eine vereinfachte Erzeugung von Ammoniak als Reduktionsmittel für in Brennkraftmaschinenabgas enthaltene Stickoxide erlaubt.

Diese Aufgabe wird durch eine Abgasreinigungsanlage mit den Merkmalen des Anspruchs 1 gelöst.

Die erfindungsgemäße Abgasreinigungsanlage zeichnet sich dadurch aus, dass sie eine Reduktionsmittelversorgung mit einer Ammoniak-Erzeugungseinheit zur Erzeugung des in das Abgas der Brennkraftmaschine zugebbaren Ammoniaks aufweist. Dabei ist die Ammoniak-Erzeugungseinheit zur Umsetzung von mit Luft oder sauerstoffhaltigem Abgas zugeführtem Stickstoff zu Ammoniak ausgebildet. Damit wird insbesondere die für Kraftfahrzeuge problematische Mitführung gasförmigen oder flüssigen Ammoniaks vermieden. Zwar sind z.B. aus den Offenlegungsschriften DE 199 09 933 A1 bzw. DE 199 22 961 A1 Methoden bekannt, bei denen Ammoniak durch Reduktion von verbrennungsquellenintern bzw. verbrennungsquellenextern erzeugtem Stickoxid bereitgestellt wird. Da dies bei reduzierenden Bedingungen in einem in die Abgasleitung integrierten Katalysator erfolgt, muss hierfür jedoch der Verbrennungsmotor zumindest zeitweise fett betrieben werden, was insbesondere bei Dieselmotoren mit Schwierigkeiten verbunden ist.

Demgegenüber ist erfindungsgemäß die Ammoniak-Erzeugungseinheit als stickstoffumsetzende Ammoniak-Erzeugungseinheit ausgeführt. In diesem Zusammenhang ist unter stickstoffumsetzend zu verstehen, dass von der Ammoniak-Erzeugungseinheit elementarer Stickstoff zur Erzeugung von Ammoniak verwendet wird. Der zur Ammoniakerzeugung verwendete Stickstoff kann in einfacher Weise der Umgebungsluft oder dem Abgas der Brennkraftmaschine entnommen werden. Somit erfolgt die Ammoniakerzeugung einerseits in vorteilhafter Weise unabhängig von den von der Brennkraftmaschine erzeugten Stickoxiden bzw. im Wesentlichen unabhängig vom Brennkraftmaschinenbetrieb, andererseits kann auf die Mitführung von Ammoniak oder ammoniakabspaltenden Materialien an Bord des Kraftfahrzeuges verzichtet werden.

In Ausgestaltung der Erfindung weist die Reduktionsmittelversorgung ferner eine Wasserstoff-Erzeugungseinheit auf und der von ihr erzeugte Wasserstoff kann von der Ammoniak-Erzeugungseinheit zur Erzeugung von Ammoniak genutzt werden.

Es ist vorgesehen, dass der von der Wasserstoff-Erzeugungseinheit erzeugte Wasserstoff bedarfsweise der Abgasanlage zugegeben werden kann. In der Abgasreinigungsanlage ist vorzugsweise stromaufwärts des SCR-Katalysators ein Partikelfilter in der Abgasleitung angeordnet. SCR-Katalysatoren besitzen häufig eine auf Vanadiumpentoxid basierende katalytische Beschichtung, welche nahezu ausschließlich auf die selektive Stickoxidverminderung bei oxidierenden Bedingungen hin angepasst ist. Es sind jedoch auch SCR-Katalysatoren mit edelmetallhaltiger katalytischer Beschichtung gebräuchlich. Von solchen SCR-Katalysatoren werden auch andere Reaktionen wie z.B. Oxidationsreaktionen katalysiert. Vorzugsweise wird in der erfindungsgemäßen Abgasreinigungsanlage ein dementsprechender SCR-Katalysator eingesetzt.

Besonders leicht, d.h. bereits bei vergleichsweise niedrigen Temperaturen wird die Oxidation von Wasserstoff katalysiert. Dabei können als Oxidationsmittel auch Stickoxide fungieren, die bei der Oxidation des Wasserstoffes ihrerseits zu Stickstoff reduziert werden. Somit erfolgt durch die Zugabe von Wasserstoff in das oxidierende Abgas bereits bei relativ niedrigen Abgastemperaturen eine wirkungsvolle Stickoxidverminderung. Bei höheren Abgastemperaturen kann die Stickoxid-verminderung durch die selektive Reduktion mit dem Reduktionsmittel Ammoniak am SCR-Katalysator realisiert werden. Somit kann in vorteilhafter Weise eine Stickoxidverminderung über einen weiten Temperaturbereich erreicht werden.
Ein weiterer Vorteil der Zugabe des von der Wasserstoff-Erzeugungseinheit erzeugten Gases in das Abgas ergibt sich durch die damit erreichte raschere Aufheizung des betreffenden Katalysators bzw. des Abgases als Folge der besonders leicht zu katalysierenden exothermen Oxidation des Wasserstoffs. So kann z.B. dadurch eine beschleunigte Erwärmung des SCR-Katalysators hinsichtlich seiner SCR-Funktion erreicht werden

Als Wasserstoff-Erzeugungseinheit kann jede beliebige, dem Fachmann geläufige Vorrichtung eingesetzt werden. Für Anwendungen in Kraftfahrzeugen kommt hierfür z.B. ein Wasserelektrolyseur oder ein Methanolreformer in Frage. Durch den Einsatz einer separaten Wasserstoff-Erzeugungseinheit wird gegenüber Verfahren, bei denen in den Brennräumen der Brennkraftmaschine durch verbrennungstechnische Maßnahmen ein wasserstoffhaltiges Gas erzeugt wird, eine erhöhte Flexibilität erreicht. Die erhöhte Flexibilität besteht einerseits darin, dass das wasserstoffhaltige Gas zu motorbetriebsunabhängigen Zeitpunkten verwendet werden kann und andererseits darin, dass es bedarfsweise gezielt an verschiedenen Stellen in die Abgasleitung zugegeben werden kann. Die Flexibilität des Systems kann noch weiter erhöht werden, wenn der Wasserstoff-Erzeugungseinheit ein Zwischenspeicher nachgeschaltet wird. Das darin zwischengespeicherte wasserstoffhaltige Gasgemisch kann dann zu Zeitpunkten eines erhöhten Bedarfs in vergleichsweise großen Mengen dem Abgas zugegeben werden. Die Wasserstoff-Erzeugungseinheit kann damit auch kleiner als ohne den Einsatz eines Zwischenspeichers ausgeführt werden.

In einer bevorzugten Ausführung ist die Wasserstoff-Erzeugungseinheit als Reformer ausgeführt, wobei der zum Betrieb der Brennkraftmaschine ohnehin mitgeführte Kraftstoff verwendet wird. Der Reformier-Prozess im Reformer kann dabei sowohl rein thermisch als auch katalytisch unterstützt mit unterstöchiometrischer Luftzugabe erfolgen. Der Wasserstoffgehalt des typischerweise dabei entstehenden Gases kann dabei durch Nachschalten eines katalytischen Shift-Prozesses weiter erhöht werden. Bei diesen an sich bekannten Shift-Prozessen wird Kohlenmonoxid mit Wasserdampf zu Kohlendioxid und Wasserstoff umgesetzt, wodurch der Kohlenmonoxidgehalt des Ausgangsgases entsprechend erniedrigt wird, und der Wasserstoffgehalt entsprechend erhöht wird.

In der erfindungsgemäßen Abgasreinigungsanlage mit stickstoffumsetzender Ammoniak-Erzeugungseinheit wird diese einerseits mit dem wasserstoffhaltigen Gas der Wasserstoff-Erzeugungseinheit versorgt und andererseits mit Luft oder mit einem aus einer beliebigen Stelle der Abgasleitung entnommenem Abgasteilstrom. Hierzu wird z.B. in einer ersten Synthesestufe durch einen an sich bekannten Prozess wie einem Plasmaprozess oder mittels eines Lichtbogens aus dem zugeführten Luftstickstoff oder dem Stickstoff des zugeführten sauerstoffhaltigen Abgases Stickoxid erzeugt. In einem, vorzugsweise katalytisch unterstützten Folgeprozess, wird dann unter Zugabe des wasserstoffhaltigen Gases das in der ersten Synthesestufe erzeugte Stickoxid zu Ammoniak reduziert.

Vorzugsweise ist stromaufwärts des Partikelfilters in der Abgasleitung ein Stickoxid-Speicherkatalysator angeordnet.

Mit dieser Ausgestaltung der Erfindung lässt sich insbesondere unter Ausnutzung des Temperaturgefälles zwischen Stickoxid-Speicherkatalysator, Partikelfilter und SCR-Katalysator bei entsprechender Anordnung in der Abgasleitung eine Abgasreinigung über einen weiten Temperaturbereich erzielen. Wird nämlich bei hoher Motorlast und damit steigender Abgastemperatur der Temperaturbereich der Wirksamkeit des Stickoxid-Speicherkatalysators verlassen, so kann die Stickoxidentfernungsfunktion vom weiter stromab liegenden und somit weniger heißen SCR-Katalysator übernommen werden.

Bei einer anderen besonders vorteilhaften Ausführungsform der erfindungsgemäßen Abgasreinigungsanlage ist stromaufwärts des Partikelfilters in der Abgasleitung ein Oxidationskatalysator angeordnet. Auch diese Anordnung ist im Zusammenhang mit der Erzeugung eines wasserstoffhaltigen Gases bzw. eines ammoniakhaltigen Gases in vorteilhafter Weise dazu geeignet, in einem sehr weiten Temperaturbereich eine Abgasreinigung zu ermöglichen.

Eine weitere Ausgestaltung der Erfindung ist dadurch gekennzeichnet, dass das Partikelfilter katalytisch beschichtet ist. Dadurch wird einerseits das Ablaufen der Oxidation von auf dem Partikelfilter niedergeschlagenen oxidierbaren festen, bzw. nichtflüchtigen Bestandteilen erleichtert. Andererseits kann von der Partikelfilterbeschichtung gleichzeitig die bei niedrigen Abgastemperaturen ablaufende selektive Stickoxidreduktion mit Wasserstoff katalysiert werden. Da das beschichtete Partikelfilter oxidationskatalytische Eigenschaften besitzt, können zusätzlich in vorteilhafter Weise gleichzeitig zur Entfernung von Partikeln auch oxidierbare und schädliche Bestandteile gasförmiger Natur aus dem Abgas entfernt werden.

In weiterer Ausgestaltung der Erfindung ist das von der Wasserstoff-Erzeugungseinheit erzeugte wasserstoffhaltige Gas eingangsseitig des SCR-Katalysators und/oder eingangsseitig des Partikelfilters und/oder Oxidationskatalysators und/oder des Stickoxid-Speicherkatalysators dem Abgas der Brennkraftmaschine zugebbar.

Wegen der guten Oxidierbarkeit des Wasserstoffs wird das wasserstoffhaltige Gas vorteilhafterweise dann eingangsseitig des in der Abgasleitung angebrachten edelmetallhaltigen Stickoxid-Speicherkatalysators bzw. SCR-Katalysators oder eingangsseitig des katalytisch beschichteten Partikelfilters dem oxidierenden Abgas zugegeben, wenn die rasche Erwärmung des entsprechenden Bauteils gewünscht ist. Die Erwärmung resultiert aus der Wärmefreisetzung der exothermen Oxidation des Wasserstoffs an diesem Bauteil. Eine weitere vorteilhafte Verwendung des wasserstoffhaltigen Gases liegt in der besonders bei niedrigen Abgastemperaturen (ca. 80 °C bis 200 °C) ablaufenden selektiven Reduktion von Stickoxiden mit Wasserstoff an einem edelmetallhaltigen Katalysator bzw. an dem katalytisch beschichteten Partikelfilter. Bei niedrigen Abgastemperaturen wird z.B. die Verminderung der Stickoxide durch Zugabe des wasserstoffhaltigen Gases eingangsseitig des Stickoxid-Speicherkatalysators erreicht. Die Stickoxidreduktion durch Wasserstoff findet an den katalytischen Zentren des edelmetallhaltigen Stickoxid-Speicherkatalysators statt. Die Zugabe des leicht oxidierbaren wasserstoffhaltigen Gases bewirkt außerdem durch den exothermen Oxidationsprozess ein Aufheizen des Stickoxid-Speicherkatalysators. Hat dieser seine Betriebstemperatur für die Stickoxidentfernung im Mager-Fett-Wechselbetrieb erreicht, kann die Zugabe des wasserstoffhaltigen Gases eingangsseitig des Stickoxid-Speicherkatalysators beendet werden und die Brennkraftmaschine vom reinen Magerbetrieb in einen Mager-Fett-Wechselbetrieb umgeschaltet werden. Die Stickoxidverminderung erfolgt dann in bekannter Weise durch abwechselnde Speicherung der Stickoxide im Stickoxid-Speicherkatalysator bei magerem Brennkraftmaschinenbetrieb und Reduktion der gespeicherten Stickoxide bei fettem Brennkraftmaschinenbetrieb. Insgesamt kann somit die Stickoxidverminderung vom Stickoxid-Speicherkatalysator in einem weiten Temperaturbereich von ca. 80 °C bis ca. 400 °C durchgeführt werden.

Bei Bedarf kann das wasserstoffhaltige Gas auch eingangsseitig des SCR-Katalysators zugegeben werden und auch hier bei niedrigen Temperaturen zur selektiven Stickoxid-Verminderung und zur raschen Aufheizung auf Betriebstemperatur genutzt werden. Durch die wahlweise Zugabe des wasserstoffhaltigen Gases an den genannten Stellen wird somit eine optimale Abgasreinigungsfunktion der gesamten Abgasreinigungsanlage erreicht.

Bei niedrigen Abgastemperaturen wird durch die Zugabe des leicht oxidierbaren wasserstoffhaltigen Gases eingangsseitig des Oxidationskatalysators erreicht, das dieser rasch auf Betriebstemperatur hinsichtlich seiner oxidationskatalytischen Wirkung gebracht wird. Dadurch kann z.B bei einem Motorwarmlauf sehr rasch eine effektive Entfernung von oxidierbaren schädlichen Bestandteilen (Kohlenmonoxid, Kohlenwasserstoffe) aus dem Abgas erfolgen. Gleichzeitig kann durch die bei niedrigen Temperaturen am edelmetallhaltigen Oxidationskatalysator ablaufende selektive Stickoxidreduktion durch Wasserstoff eine wirkungsvolle Stickoxidverminderung erreicht werden. Ebenso kann in vorteilhafter Weise durch die Zugabe des von der Wasserstoff-Erzeugungseinheit erzeugten wasserstoffhaltigen Gases eingangsseitig des SCR-Katalysators erreicht werden, dass dieser rasch seine Betriebstemperatur hinsichtlich der SCR-Funktion erreicht. Im Falle eines edelmetallhaltigen SCR-Katalysators kann auch an diesem Katalysator mit Hilfe des zugegebenen Wasserstoffes, vorzugsweise bei niedrigen Temperaturen, eine Stickoxidverminderung erreicht werden.

Im Folgenden wird die Erfindung anhand von Zeichnungen und zugehörigen Beispielen näher erläutert. Dabei zeigt
Fig. 1 ein schematisches Blockbild einer Brennkraftmaschine mit zugehöriger Abgasreinigungsanlage mit Partikelfilter und SCR-Katalysator in der Abgasleitung sowie Zugabestellen für wasserstoffhaltiges Gas und ammoniakhaltiges Gas,
Fig. 2 ein schematisches Blockbild einer Brennkraftmaschine mit zugehöriger Abgasreinigungsanlage wie in Fig. 1, jedoch mit einem Stickoxid-Speicherkatalysator, der stromaufwärts des Partikelfilters in der Abgasleitung angeordnet ist,
Fig. 3 ein schematisches Blockbild einer Brennkraftmaschine mit zugehöriger Abgasreinigungsanlage wie in Fig. 1, jedoch mit einem Oxidationskatalysator, der stromaufwärts des Partikelfilters in der Abgasleitung angeordnet ist,
Fig. 4 ein schematisches Blockbild der Systemanordnung von Wasserstoff-Erzeugungseinheit und Ammoniak-Erzeugungseinheit.

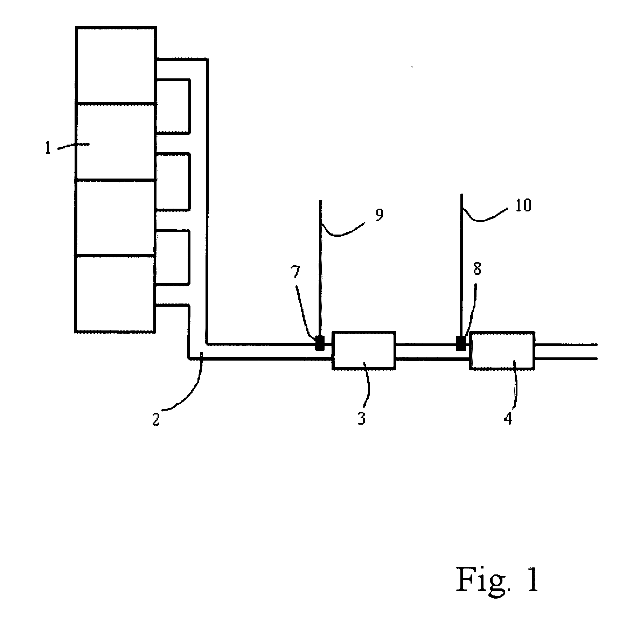

Gemäß Fig. 1 wird das von der hier beispielhaft vierzylindrig ausgeführten Brennkraftmaschine 1 abgegebene Abgas über eine Abgasleitung 2 einem Partikelfilter 3 und nachfolgend einem SCR-Katalysator 4 zugeführt. Der SCR-Katalysator ist vorzugsweise edelmetallhaltig. Typischerweise sind solche SCR-Katalysatoren mit einer zeolithischen Beschichtung versehen, welche Edelmetalle der Platingruppe enthält.

Weiterhin sind in der in Fig. 1 dargestellten Ausführungsform der Abgasreinigungsanlage Zugabeleitungen 9, 10 vorgesehen, mit denen die von der hier nicht eingezeichneten Wasserstoff-Erzeugungseinheit bzw. Ammoniak-Erzeugungseinheit bereitgestellten Gase über die Zugabestellen 7, 8 in die Abgasleitung 2 zugegeben werden können. Dabei kann das von der Wasserstoff-Erzeugungseinheit erzeugte Gas über beide Zugabeleitungen 9, 10 bzw. über beide Zugabestellen 7, 8 dem Abgas zugegeben werden. Das von der Ammoniak-Erzeugungseinheit erzeugte Gas wird nur über die Zugabeleitung 10 bzw. über die Zugabestelle 8 dem Abgas zugegeben.

Nicht erfindungsrelevante Bauteile zur Steuerung der Brennkraftmaschine 1 und der gesamten Abgasreinigungsanlage wie z.B. ein elektronisches Steuergerät zur Steuerung des Motorbetriebs, der Wasserstoff-Erzeugungseinheit bzw. der Ammoniak-Erzeugungseinheit, zur Steuerung der Gaszugabe usw., ferner Temperatursonden und Lambdasonden in der Abgasleitung und dergl. sind der Übersicht wegen nicht in die Zeichnungen mit aufgenommen.

In einem bevorzugten Ausführungsbeispiel ist das Partikelfilter 3 mit einer oxidationskatalytisch wirksamen Beschichtung versehen, welche typischerweise Edelmetalle aus der Platingruppe enthält. In diesem Fall wird bei niedrigen Abgastemperaturen (ca. 80 °C bis ca. 200 °C eingangsseitig des Partikelfilters 3) von der Wasserstoff-Erzeugungseinheit bzw. von dem dieser nachgeschalteten Zwischenspeicher über die Zugabeleitung 9 und der Zugabestelle 7 wasserstoffhaltiges Gas dem Abgas zumindest zeitweise zugegeben. Die dann ablaufende exotherme Oxidation des leicht oxidierbaren wasserstoffhaltigen Gases im Partikelfilter 3 erwärmt diesen, so dass er rasch seine Betriebstemperatur hinsichtlich der Oxidation weiterer oxidierbarer Abgasbestandteile wie z.B. Kohlenwasserstoffe erreicht. Zugleich findet im Partikelfilter 3 bei diesen Temperaturen eine selektive Reduktion von im Abgas der Brennkraftmaschine 1 enthaltenen Stickoxiden mit dem zugegebenen Reduktionsmittel Wasserstoff statt. Typischerweise ist diese Reaktion allerdings auf einen relativ schmalen Temperaturbereich begrenzt. Ist bei zunehmender Erwärmung des Partikelfilters 3 einerseits dessen Betriebstemperatur zur Oxidation von Kohlenwasserstoffen erreicht und andererseits der optimale Temperaturbereich hinsichtlich der Stickoxidverminderung bereits überschritten, so wird die Zugabe des wasserstoffhaltigen Gases über die Zugabestelle 7 beendet.

Hat zu diesem Zeitpunkt der stromabwärts des Partikelfilters 3 in der Abgasleitung 2 angeordnete SCR-Katalysator 4 seine Betriebstemperatur zur selektiven Stickoxidverminderung mit Ammoniak noch nicht erreicht, so wird zumindest zeitweise die Zugabe von wasserstoffhaltigem Gas über die Zugabeleitung 10 und die Zugabestelle 8 vorgenommen. Dadurch wird eine beschleunigte Erwärmung des SCR-Katalystors erreicht. Zusätzlich findet nun an diesem Katalysator die selektive Verminderung von Stickoxid mit dem Reduktionsmittel Wasserstoff statt. Bei entsprechend gesteigerter Temperatur des SCR-Katalysators 4 kann die Zugabe des wasserstoffhaltigen Gases beendet werden und zur Beibehaltung der Stickoxidverminderungsfunktion Ammoniak von der Ammoniak-Erzeugungseinheit über die Zugabeleitung 10 und die Zugabestelle 8 dem Abgas zugegeben werden.

Die Ermittlung der geeigneten Zugabemenge des jeweiligen Reduktionsmittels und die Auswahl der Zugabestelle erfolgt in vorteilhafter Weise in dem bei heutigen Brennkraftmaschinen sowieso vorhandenen elektronischen Steuergerät. Dabei wird vorzugsweise, wie oben beschrieben, die Temperatur des Abgases als Kriterium herangezogen. Eine auf dem jeweiligen Betriebspunkt der Brennkraftmaschine basierende kennfeldgesteuerte Zugabe der Reduktionsmittel ist ebenfalls möglich.

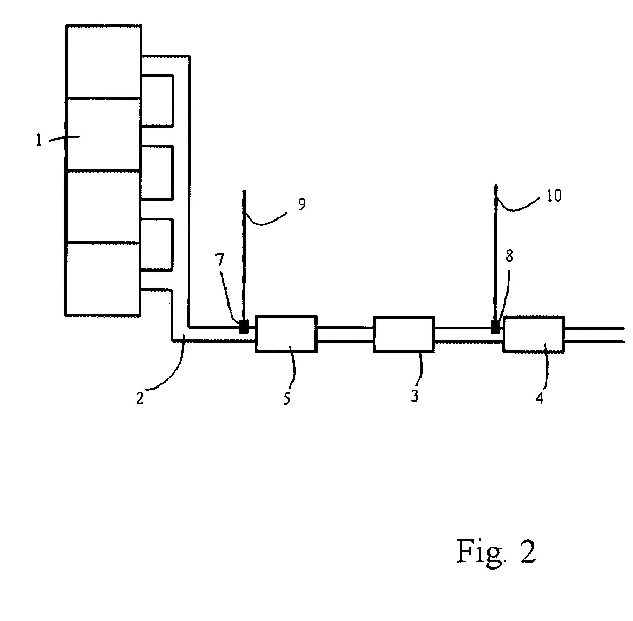

Fig. 2 zeigt ein weiteres Beispiel der erfindungsgemäßen Abgasreinigungsanlage. Hierbei sind in Bezug auf Fig. 1 übereinstimmende Merkmale mit identischen Bezugszeichen versehen. Zusätzlich zu der in Fig. 1 dargestellten Ausführungsform ist stromaufwärts des katalytisch beschichteten Partikelfilters 3 ein Stickoxid-Speicherkatalysator 5 in der Abgasleitung 2 angeordnet. Die Zugabestelle 7 des wasserstoffhaltigen Gases ist hier eingangsseitig dieses Katalysators 5 vorgesehen.

Da typischerweise der Stickoxid-Speicherkatalysator 5 ebenfalls Edelmetalle der Platingruppe enthält, verfügt auch dieser Katalysator 5 über die Eigenschaft, Stickoxide bei niedrigen Abgastemperaturen mit Hilfe des Reduktionsmittels Wasserstoff reduzieren zu können. Hauptsächlich, d.h. bei Temperaturen des Stickoxid-Speicherkatalysators 5 von ca. 200 °C bis ca. 450 °C, wird die Stickoxidverminderung im Abgas der Brennkraftmaschine 1 allerdings in bekannter Weise durch einen Mager-Fett-Wechselbetrieb realisiert. Ist der genannte Temperaturbereich unterschritten, so wird das wasserstoffhaltige Gas eingangsseitig des Stickoxid-Speicherkatalysators 5 dem Abgas zugegeben. Dadurch wird eine beschleunigte Erwärmung des Stickoxid-Speicherkatalysators erreicht. Bei gesteigerter Temperatur des Katalysators 5 wird die Zugabe des wasserstoffhaltigen Gases über die Zugabestelle 7 beendet und die Brennkraftmaschine 1 vom reinen Magerbetrieb in den Mager-Fett-Wechselbetrieb umgeschaltet. Damit bleibt einerseits die Stickoxidverminderungsfunktion bestehen, andererseits werden in den Magerphasen des Mager-Fett-Wechselbetriebs der Brennkraftmaschine 1 im Stickoxid-Speicherkatalysator 5 oxidierbare gasförmige Schadstoffe wie Kohlenmonoxid und Kohlenwasserstoffe oxidiert und unschädlich gemacht.

Unterstützend kann in den Magerphasen des Mager-Fett-Wechselbetriebs Ammoniak aus der Ammoniak-Erzeugungseinheit über die Zugabeleitung 10 und die Zugabestelle 8 eingangsseitig des SCR-Katalysators 4 dem Abgas zugegeben werden. Damit kann z.B. als Stickoxid-Schlupf durch den Stickoxid-Speicherkatalysator 5 durchtretendes Stickoxid im SCR-Katalysator 4 unschädlich gemacht werden. Dadurch kann die Brennkraftmaschine 1 deutlich länger im verbrauchssparenden Magermodus betrieben werden. Ist die Temperatur des SCR-Katalysators 4 für eine optimale Stickoxidverminderung mit Ammoniak noch nicht errreicht, kann auch hier durch zeitweise Zugabe von wasserstoffhaltigem Gas aus der Wasserstoff-Erzeugungseinheit eine rasche Erwärmung des SCR-Katalysators 4 erreicht werden.

Ein weiterer Vorteil der in Fig. 2 gezeigten Ausgestaltung der Erfindung besteht darin, dass bei Überschreiten des Temperaturbereichs der Stickoxid-Speicherkatalysatorwirksamkeit bei ca. 450 °C der weiter stromab in der Abgasleitung 2 angeordnete SCR-Katalysator 4 weiterhin aktiv ist. Wegen der räumlichen Entfernung zwischen Stickoxid-Speicherkatalysator 5 und SCR-Katalysator 4 ist bei höheren Abgastemperaturen ein Temperaturgefälle von ca. 100 °C zwischen diesen Katalysatoren 5, 4 vorhanden. Da typischerweise die selektive Stickoxidverminderung mit Ammoniak bis zu etwa 450 °C im SCR-Katalysator 4 abläuft, wird bei einer Abgastemperatur oberhalb von ca. 400 °C eingangsseitig des Stickoxid-Speicherkatalysators 5 die Brennkraftmaschine 1 vom Mager-Fett-Wechselbetrieb in den reinen Magerbetrieb umgeschaltet und die Stickoxidverminderung allein vom SCR-Katalysator 4 übernommen. Auf diese Weise kann eine effektive Stickoxidverminderung des Abgases der Brennkraftmaschine 1 in einem sehr weiten Temperaturbereich durchgeführt werden.

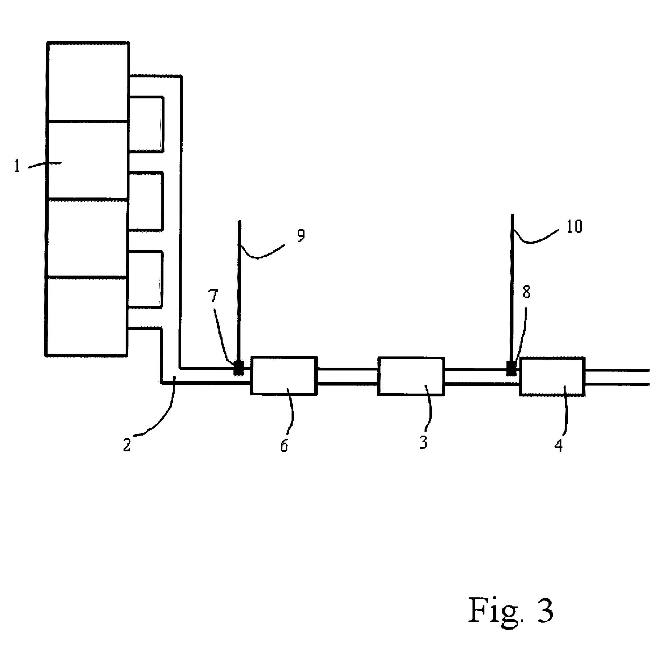

Das in Fig. 3 gezeigte weitere Beispiel der erfindungsgemäßen Abgasreinigungsanlage unterscheidet sich von dem in Fig. 2 gezeigten Beispiel dadurch, dass stromaufwärts des Partikelfilters 3 ein Oxidationskatalysator 6 in der Abgasleitung 2 angeordnet ist. Die Zugabestelle 7 des wasserstoffhaltigen Gases ist hier eingangsseitig dieses Katalysators 5 vorgesehen. Ferner ist das Partikelfilter 3 in diesem Ausführungsbeispiel unbeschichtet. In Bezug auf Fig. 1 bzw. Fig. 2 sind übereinstimmende Merkmale mit identischen Bezugszeichen versehen. Analog zu den in Fig. 1 bzw. Fig. 2 gezeigten Ausführungsbeispielen ist das von der Wasserstoff-Erzeugungseinheit erzeugte wasserstoffhaltige Gas sowohl über die Zugabeleitung 9 und die Zugabestelle 7 als auch über die Zugabeleitung 10 und die Zugabestelle 8 dem Abgas zugebbar.

Bei niedrigen Abgastemperaturen von ca. 80 °C bis ca. 200 °C eingangsseitig des Oxidationskatalysators 6 wird wasserstoffhaltiges Gas von der Wasserstoff-Erzeugungseinheit bzw. von dem dieser nachgeschalteten Zwischenspeicher über die Zugabeleitung 9 und der Zugabestelle 7 dem Abgas zumindest zeitweise zugegeben. Die dann ablaufende exotherme Oxidation des leicht oxidierbaren wasserstoffhaltigen Gases im Oxidationskatalysator 6 erwärmt diesen, so dass er rasch seine Betriebstemperatur hinsichtlich der Oxidation weiterer oxidierbarer Abgasbestandteile wie z.B. Kohlenwasserstoffe erreicht. Zugleich findet im Oxidationskatalysator 3 bei diesen Temperaturen eine selektive Reduktion von im Abgas der Brennkraftmaschine 1 enthaltenen Stickoxiden mit dem zugegebenen Reduktionsmittel Wasserstoff statt. Ist bei zunehmender Erwärmung des Oxidationskatalysators 6 einerseits dessen Betriebstemperatur zur Oxidation von Kohlenwasserstoffen erreicht und andererseits der optimale Temperaturbereich hinsichtlich der Stickoxidverminderung bereits überschritten, so wird die Zugabe des wasserstoffhaltigen Gases über die Zugabestelle 7 beendet.

Hat zu diesem Zeitpunkt der stromabwärts des Partikelfilters 3 in der Abgasleitung 2 angeordnete SCR-Katalysator 4 seine Betriebstemperatur zur selektiven Stickoxidverminderung mit Ammoniak noch nicht erreicht, so wird zumindest zeitweise die Zugabe von wasserstoffhaltigem Gas über die Zugabeleitung 10 und die Zugabestelle 8 vorgenommen. Dadurch wird eine beschleunigte Erwärmung des SCR-Katalystors erreicht. Zusätzlich findet nun an diesem Katalysator die selektive Verminderung von Stickoxid mit dem Reduktionsmittel Wasserstoff statt. Bei entsprechend gesteigerter Temperatur des SCR-Katalysators 4 kann die Zugabe des wasserstoffhaltigen Gases beendet werden und zur Beibehaltung der Stickoxidverminderungsfunktion Ammoniak von der Ammoniak-Erzeugungseinheit über die Zugabeleitung 10 und die Zugabestelle 8 dem Abgas zugegeben werden.

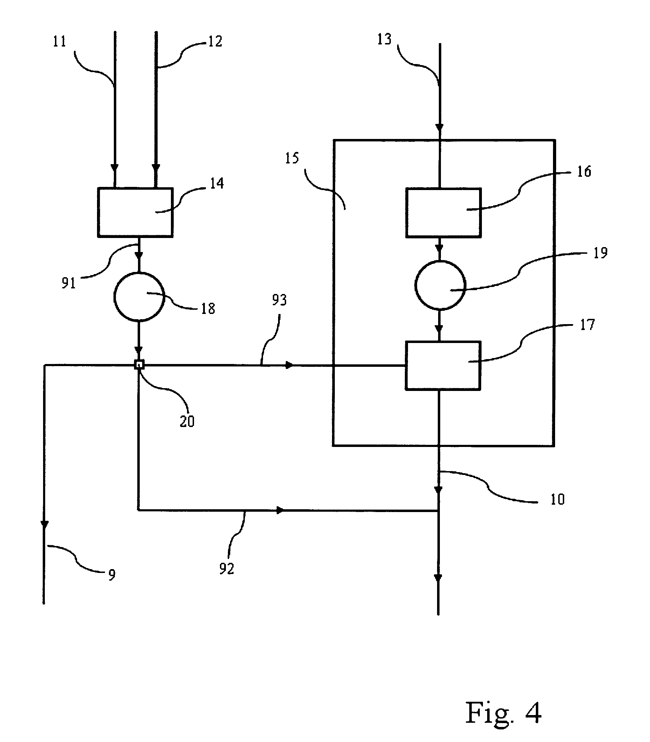

In Fig. 4 zeigt ein Ausführungsbeispiel der Systemanordnung von Wasserstoff-Erzeugungseinheit 14 und Ammoniak-Erzeugungseinheit 15 sowie der zugehörigen Infrastruktur als schematisches Blockbild. Dabei wird unter Verwendung identischer Bezugszeichen auf die in den Fig. 1 bis 3 dargestellten Merkmale Bezug genommen. Steuerleitungen und Leitungen zur elektrischen Energieversorgung sowie nicht erfindungswesentliche Bauteile wie z.B. Pumpen zur Kraftstoff- oder Gasförderung sind der Übersicht wegen nicht in die Zeichnung mit aufgenommen.

Die Wasserstoff-Erzeugungseinheit 14 ist vorzugsweise als katalytischer Reformer ausgeführt und wird über die Kraftstoffzufuhrleitung 11 bzw. die Luftzufuhrleitung 12 mit Kraftstoff bzw. Luft versorgt. Als Kraftstoff wird vorzugsweise der zum Betrieb der Brennkraftmaschine 1 an Bord des Kraftfahrzeugs verfügbare Kraftstoff verwendet. In der Wasserstoff-Erzeugungseinheit 14 wird bei Bedarf der zugeführte Kraftstoff in einem katalytischen Reformierprozess mit der zugeführten Luft zu einem wasserstoffhaltigen Gas umgesetzt und über die Leitung 91 einem Zwischenspeicher 18 zugeführt. Über eine z.B. als Vierwegeventil ausgeführte Umschaltweiche 20 kann von dort das erzeugte wasserstoffhaltige Gas wahlweise über eine Leitung 93 der Ammoniak-Erzeugungseinheit 15 zugeführt werden und/oder über die Leitung 92 abgegeben werden bzw. über die Zugabeleitung 9 dem Abgas der Brennkraftmaschine 1 zugegeben werden. Die Leitung 92 mündet in die Zugabeleitung 10, welche ihrerseits zur Abgasleitung 2 weitergeführt ist.

Die Ammoniak-Erzeugungseinheit 15 dient der bedarfsweisen Erzeugung von ammoniakhaltigem Gas. Sie weist in dem hier dargestellten bevorzugten Ausführungsbeispiel einen Stickoxid-Generator 16, einen Zwischenspeicher 19 und eine Stickoxid-Reduktionseinheit 17 auf. Über eine Zufuhrleitung 13 wird dem Sickoxid-Generator 16 Luft oder ein aus der Abgasleitung 2 der Brennkraftmaschine 1 entnommener Teilstrom sauerstoffhaltigen Abgases zugeführt. Die Erzeugung von Stickoxid im Stickoxid-Generator erfolgt vorzugsweise mit Hilfe eines Lichtbogens, jedoch kann hierfür z.B. auch ein Plasmaprozesses eingesetzt werden. Das erzeugte stickoxidhaltige Gas kann in dem nachgeschalteten Zwischenspeicher 19 zwischengespeichert werden. Von dort ist es der Stickoxid-Reduktionseinheit 17 zugebbar. In der Stickoxid-Reduktionseinheit 17 wird das zugeführte Stickoxid mit Hilfe des über die Leitung 93 zugeführten wasserstoffhaltigen Gases zu Ammoniak reduziert. Hierfür kommt vorzugsweise ein katalytischer Prozess in Frage, welcher kontinuierlich oder diskontinuierlich in an sich bekannter Weise durchgeführt werden kann. Beispielweise kann die kontinuierliche Umsetzung von Stickoxid zu Ammoniak mit Hilfe des Reduktionsmittels Wasserstoff an jedem dafür geeigneten Katalysator erfolgen. Besonders geeignet sind dafür Katalysatoren, welche eine katalytische Beschichtung ähnlich der von üblichen Dreiwege-Katalysatoren besitzen. Für eine diskontinuierliche Ammoniakerzeugung weist die Stickoxid-Reduktionseinheit 17 vorzugsweise einen Stickoxid-Speicherkatalysator auf, dem ein Ammoniakerzeugungskatalysator nachgeschaltet sein kann. Nach Speicherung einer ausreichenden Menge an Stickoxid im Stickoxid-Speicherkatalysator wird durch Zuschalten von wasserstoffhaltigem Gas aus der Leitung 93 in bekannter Weise das gespeicherte Stickoxid aus dem Stickoxid-Speicherkatalysator freigesetzt und zu Ammoniak reduziert. Auf diese Weise erzeugtes Ammoniak wird dann über die Zugabe-Leitung 10 dem Abgas der Brennkraftmaschine 1 zugegeben. Für eine geeignete zeitliche Aufteilung der Ammoniakzugabe kann es auch vorteilhaft sein, den Zwischenspeicher 19 direkt ausgangsseitig der Stickoxid-Reduktionseinheit 17 anzuordnen.

Durch die beschriebene beispielhafte Ausführung von Wasserstoff-Erzeugungseinheit 14 und Ammoniak-Erzeugungseinheit 15 und deren Zusammenwirken ist es also in vorteilhafter Weise möglich, dem Abgas der Brennkraftmaschine 1 wasserstoffhaltiges Gas bzw. ammoniakhaltiges Gas bedarfsgerecht über die Zugabeleitungen 9, 10 und die Zugabestellen 7, 8 zuzugeben.

## Patentansprüche

1. Abgasreinigungsanlage zur Reinigung des Abgases einer vorzugsweise mager betriebenen Brennkraftmaschine, insbesondere eines in Kraftfahrzeugen verwendeten Dieselmotors, mit einer Abgasleitung (2), in der ein SCR-Katalysator (4) angeordnet ist und mit einer Reduktionsmittelversorgung, wobei von der Reduktionsmittelversorgung Ammoniak eingangsseitig des SCR-Katalysators (4) in das Abgas der Brennkraftmaschine zugebbar ist, wobei die Reduktionsmittelversorgung eine Ammoniak-Erzeugungseinheit (15) zur Erzeugung des in das Abgas der Brennkraftmaschine (1) zugebbaren Ammoniaks aufweist,
**dadurch gekennzeichnet, dass**
die Ammoniak-Erzeugungseinheit (15) zur Umsetzung von mit Luft oder sauerstoffhaltigem Abgas zugeführtem Stickstoff zu Ammoniak ausgebildet ist.

2. Abgasreinigungsanlage nach Anspruch 1,
**dadurch gekennzeichnet, dass**
die Reduktionsmittelversorgung ferner eine Wasserstoff-Erzeugungseinheit (14) aufweist und von der Wasserstoff-Erzeugungseinheit (14) erzeugter Wasserstoff von der Ammoniak-Erzeugungseinheit (15) zur Erzeugung von Ammoniak genutzt werden kann.

3. Abgasreinigungsanlage nach Anspruch 2,
**dadurch gekennzeichnet, dass**
die Wasserstoff-Erzeugungseinheit (14) als Reformer zur Reformierung des zum Betrieb der Brennkraftmaschine (1) verwendeten Kraftstoffs ausgeführt ist.

4. Abgasreinigungsanlage nach Anspruch 2 oder 3,
**dadurch gekennzeichnet, dass**
von der Wasserstoff-Erzeugungseinheit (14) erzeugter Wasserstoff dem Abgas der Brennkraftmaschine (1) zugebbar ist.

5. Abgasreinigungsanlage nach einem der Ansprüche 1 bis 4,
**dadurch gekennzeichnet, dass**
stromaufwärts des SCR-Katalysators (4) ein Partikelfilter (4) in der Abgasleitung (2) angeordnet ist.

6. Abgasreinigungsanlage nach Anspruch 5,
**dadurch gekennzeichnet, dass**
stromaufwärts des Partikelfilters (4) ein Stickoxid-Speicherkatalysator (5) und/oder ein Oxidationskatalysator (6) in der Abgasleitung (2) angeordnet ist.

7. Abgasreinigungsanlage nach Anspruch 5 oder 6,
**dadurch gekennzeichnet, dass**
das Partikelfilter (4) katalytisch beschichtet ist.

8. Abgasreinigungsanlage nach Anspruch 6 oder 7,
**dadurch gekennzeichnet, dass**
das von der Wasserstoff-Erzeugungseinheit (14) erzeugte Gas eingangsseitig des SCR-Katalysators (4) und/oder eingangsseitig des Partikelfilters (3) und/oder des Oxidationskatalysators (6) und/oder des Stickoxid-Speicherkatalysators (5) dem Abgas der Brennkraftmaschine (1) zugebbar ist.
